# FASCICULE DE BREVET EUROPEEN

(11) **EP 2 288 813 B1**
(45) Date de publication et mention de la délivrance du brevet: **07.06.2017**
(21) Numéro de dépôt: 09769441.8
(22) Date de dépôt: 15.04.2009
(51) Int. Cl.: F04D 27/02, F01D 17/16, F02C 6/08, F04D 29/68, F04D 29/56

(54) **INJECTION D'AIR DANS LA VEINE D'UN COMPRESSEUR DE TURBOMACHINE**
EINSPRITZUNG VON LUFT IN DEN FLIESSWEG EINES TURBOMASCHINENKOMPRESSORS
INJECTION OF AIR INTO THE FLOW PATH OF A TURBOMACHINE COMPRESSOR

(30) Priorité: 25.06.2008 FR 0803552
(43) Date de publication de la demande: 02.03.2011
(73) Titulaire: Snecma, 75015 Paris (FR)
(72) Inventeur: DOMERCQ, Olivier, Stéphane, F-77170 Brie Comte Robert (FR); PERROT, Vincent, Paul, Gabriel, F-94700 Maisons Alfort (FR); POITEVIN, Jean-Pierre, F-77590 Chartrettes (FR)
(74) Mandataire: Ramey, Daniel
(86) Numéro de dépôt international: PCT/FR2009/000438
(87) Numéro de publication internationale: WO 2009/156600

(56) Documents cités:
- EP-A- 0 477 740
- EP-A- 1 609 999
- DE-A1- 10 233 032
- GB-A- 799 675
- US-A- 3 123 283
- US-A- 4 856 962

## Description

La présente invention concerne un compresseur de turbomachine telle qu'un turboréacteur ou un turbopropulseur d'avion, comprenant au moins un étage redresseur à aubes à calage variable.

Le document DE-A-10233032 décrit un compresseur de turbomachine avec toutes les caractéristiques du préambule de la revendication 1.

Les aubes à calage variable de ce redresseur sont portées par un carter externe du compresseur et comprennent chacune une pale qui est reliée à son extrémité radialement externe par une platine à contour sensiblement circulaire à un pivot cylindrique radial qui définit l'axe de rotation de l'aube et qui est généralement centré et guidé en rotation dans un orifice correspondant du carter externe. L'extrémité radialement interne de l'aube comprend en général un second pivot cylindrique s'étendant le long de l'axe de rotation de l'aube et guidé en rotation dans un orifice d'un carter interne du compresseur. Le pivot externe de l'aube est relié par une biellette à un anneau de commande déplacé en rotation autour du carter externe par un vérin ou analogue. La rotation de l'anneau de commande transmise par les biellettes fait tourner les aubes autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une position « d'ouverture » ou « de pleine ouverture » dans laquelle chaque aube s'étend sensiblement parallèlement à l'axe longitudinal de la turbomachine, et une position « de fermeture » ou « de quasi-fermeture » dans laquelle les aubes sont inclinées par rapport à l'axe de la turbomachine et réduisent ainsi la section de passage de l'air à travers l'étage d'aubes. Lorsque les aubes sont en position d'ouverture, le débit d'air s'écoulant dans le compresseur a une valeur maximale, et lorsque les aubes sont en position de fermeture, le débit d'air s'écoulant dans le compresseur a une valeur minimale (pour un régime de fonctionnement donné). Les aubes peuvent adopter des positions intermédiaires entre ces deux positions extrêmes pour faire varier le débit d'air circulant dans le compresseur.

Lorsque la turbomachine est à bas régime ou au régime de ralenti, les aubes à calage variable sont amenées dans leur position de fermeture, et lorsque la turbomachine est en régime plein gaz (pour le décollage par exemple), les aubes sont amenées dans leur position d'ouverture.

A bas régime, malgré la position fermée des aubes de stator, l'angle d'incidence entre la direction d'écoulement de l'air dans la veine du compresseur et le profil des aubes peut atteindre de fortes valeurs qui donnent naissance à des décollements d'air réduisant encore la section de passage de l'air à travers l'étage d'aubes. Ces zones de décollement sont principalement localisées au niveau des extrémités radialement interne et externe des aubes, et disparaissent lorsque l'incidence du fluide sur les aubes atteint des valeurs plus réduites.

Il est connu de limiter ces décollements par injection ou aspiration d'air dans les zones concernées. Toutefois, la géométrie de cette injection ou de cette aspiration est en général fixe et, si cette injection ou aspiration est bénéfique à un régime donné de fonctionnement du compresseur, sa présence en continu, y compris à des régimes où elle n'est pas nécessaire, peut affecter les performances du moteur (en dégradant le rendement du compresseur et donc la consommation spécifique). En outre, une géométrie fixe d'injection ou d'aspiration limite les capacités d'optimisation de la marge au pompage d'un compresseur.

L'invention a notamment pour but d'éviter ces inconvénients de façon simple, efficace et économique.

Elle propose à cet effet un compresseur de turbomachine, comprenant un carter annulaire et au moins un étage redresseur formé d'une rangée annulaire d'aubes à calage variable comportant chacune une pale reliée à au moins une extrémité par une platine à contour sensiblement circulaire à un pivot cylindrique radial guidé en rotation dans un orifice correspondant du carter, chaque aube étant déplaçable en rotation autour d'un axe défini par le pivot de l'aube entre une première position et une seconde position, caractérisé en ce que les platines d'au moins certaines des aubes comportent chacune un conduit d'alimentation en air d'un passage qui est formé dans le carter et dont une extrémité débouche dans la veine du compresseur pour l'injection d'air dans cette veine en amont de l'aube, le conduit d'alimentation formé dans la platine ayant une extrémité destinée à communiquer avec le passage correspondant du carter lorsque l'aube est dans la première position, et à être obturée par le carter lorsque l'aube est dans la seconde position, de façon à ce que le débit d'injection d'air dépende de l'angle de calage des aubes.

Avantageusement, les aubes sont déplaçables entre une position d'ouverture et une position de fermeture, les conduits d'alimentation des aubes étant destinés à communiquer avec les passages du carter lorsque les aubes sont en position de fermeture ou dans une position intermédiaire, et à être obturés par le carter lorsque les aubes sont en position d'ouverture.

Dans ce dernier cas, les aubes étant en position d'ouverture, les conduits des platines sont obturés par le carter et il n'y a pas d'air injecté dans la veine. Le rendement de la turbomachine n'est donc pas affecté par une injection d'air qui serait non nécessaire aux régimes élevés où les aubes sont en position d'ouverture. Lorsque les aubes sont en position de fermeture ou en position intermédiaire, les conduits des platines communiquent avec les passages formés dans le carter et de l'air est alors injecté en amont dans la veine du compresseur pour réduire les décollements d'air précités (décollements pouvant survenir sur les aubes de stator ou sur des aubes d'une roue mobile située en aval), ce qui améliore les performances de la turbomachine aux bas régimes ou aux régimes intermédiaires.

En d'autres termes, le réglage de la position angulaire des aubes de stator permet de moduler le débit d'air injecté dans la veine du compresseur, ce débit étant nul à plein régime pour ne pas pénaliser et dégrader la consommation spécifique du moteur et ayant une valeur déterminée à bas régime ou à régime intermédiaire pour réduire les décollements de l'air sur les aubes de redresseur. Le débit maximum d'air injecté représente par exemple moins de 5% du débit d'air s'écoulant dans la veine du compresseur. Ce débit varie en fonction de l'angle de calage des aubes et peut atteindre des valeurs moyennes lorsque les aubes sont dans des positions intermédiaires. Le débit d'air injecté peut être calibré de façon précise en contrôlant les sections des conduits formés dans les platines et le carter.

Avantageusement, les passages formés dans le carter débouchent dans la veine du compresseur, en amont de l'étage redresseur ou en amont d'une roue mobile ou d'un étage redresseur précédent du compresseur. L'entrée du passage du carter débouche de préférence sur la paroi cylindrique d'un évidement de logement de la platine de l'aube. Selon une autre caractéristique de l'invention, la sortie du conduit de chaque platine peut alors être situé sur le bord périphérique de cette platine.

La sortie du conduit de chaque platine peut avoir une forme sensiblement circulaire, triangulaire, oblongue, rectangulaire ou trapézoïdale.

L'entrée du conduit d'alimentation de chaque platine peut déboucher dans la veine du compresseur, par exemple du côté de l'extrados de la pale de cette aube, pour le prélèvement d'air dans cette veine. On crée ainsi une recirculation d'air d'aval en amont sur le redresseur. Le prélèvement d'air du côté des extrados des pales des aubes permet de limiter les décollements d'air précités. C'est en effet au niveau des extrados des pales des aubes que le flux d'air s'écoulant dans la veine est soumis à un phénomène de recompression favorisant la création de zones de décollement à proximité du bord de fuite des pales.

En variante, le conduit de chaque platine est relié en entrée à un conduit sensiblement radial formé dans le pivot de l'aube et relié à un canal de prélèvement d'air provenant par exemple de la veine du compresseur, en aval.

L'injection d'air peut avoir lieu au niveau des extrémités radialement externes ou au niveau des extrémités radialement internes des aubes du redresseur, voire les deux. L'injection d'air au niveau d'une des extrémités d'une aube permet d'éviter le décollement d'air sur l'aube, notamment dans les zones proches du carter (extrémités radialement interne et/ou externe), et peut avoir un impact positif sur toute son étendue radiale.

L'invention concerne également une turbomachine, telle qu'un turboréacteur, un turbopropulseur d'avion, un turbomoteur d'hélicoptère ou une machine industrielle, caractérisée en ce qu'elle comprend un compresseur du type précité.

L'invention concerne enfin une aube de redresseur à calage variable pour un compresseur tel que décrit ci-dessus, caractérisée en ce qu'elle comprend une pale reliée à une extrémité par une platine à contour sensiblement circulaire à un pivot cylindrique définissant l'axe de rotation de l'aube, la platine comportant un conduit dont une extrémité débouche sur son bord périphérique.

L'autre extrémité du conduit peut être reliée à un conduit sensiblement radial formé dans le pivot cylindrique. En variante, l'autre extrémité du conduit débouche sur une face de la platine, située du côté de la pale.

L'invention sera mieux comprise et d'autres détails, caractéristiques et avantages de la présente invention apparaîtront plus clairement à la lecture de la description qui suit faite à titre d'exemple non limitatif et en référence aux dessins annexés dans lesquels :
- la figure 1 est une demi-vue schématique partielle en coupe axiale d'un redresseur d'un compresseur de turbomachine,
- la figure 2 est une vue schématique partielle de dessus d'une aube à calage variable en position de fermeture ou de quasi-fermeture,
- la figure 3 est une vue en coupe selon la ligne III-III' de la figure 2,
- la figure 4 est une vue correspondant à la figure 2 et illustre l'aube à calage variable en position d'ouverture ou de pleine ouverture,
- la figure 5 est une vue en coupe selon la ligne V-V' de la figure 4,
- la figure 6 est une vue schématique partielle de dessus d'une variante de réalisation d'une aube à calage variable en position de fermeture,
- la figure 7 est une vue en coupe selon la ligne VII-VII' de la figure 6,
- la figure 8 est une vue correspondant à la figure 6 et illustre l'aube à calage variable en position d'ouverture,
- la figure 9 est une vue en coupe selon la ligne IX-IX' de la figure 8.

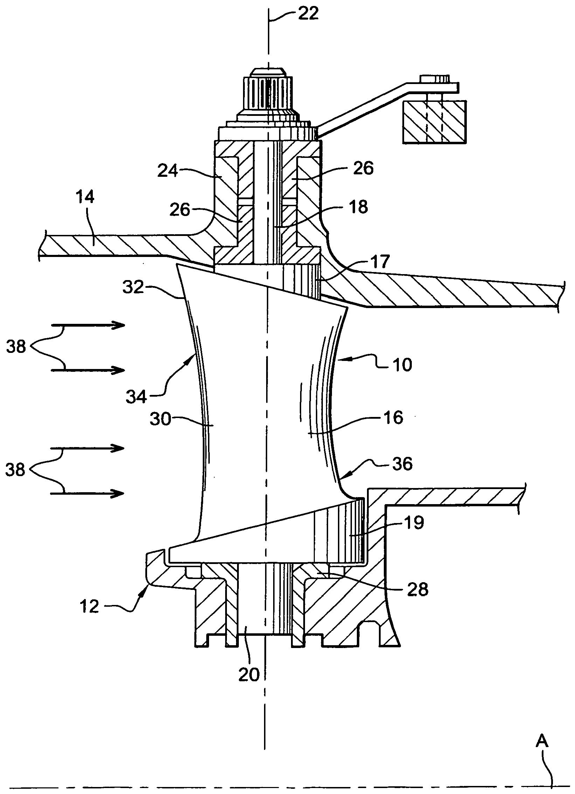

On se réfère d'abord à la figure 1 qui représente un étage redresseur d'aubes 10 à calage variable d'un compresseur haute-pression de turbomachine, ces aubes 10 étant régulièrement réparties autour de l'axe longitudinal A de la turbomachine et s'étendant sensiblement radialement entre un carter interne 12 et un carter externe 14 du compresseur.

Chaque aube 10 comprend une pale 16 reliée à son extrémité radialement externe par une première platine 17 à un pivot cylindrique radial 18, et à son extrémité radialement interne par une seconde platine 19 à un pivot cylindrique radial 20, les pivots interne 20 et externe 18 définissant l'axe 22 de rotation de l'aube.

Le pivot cylindrique externe 18 est engagé dans une cheminée cylindrique 24 du carter externe 14 et est guidé en rotation dans cette cheminée par des bagues cylindriques 26. Le pivot cylindrique interne 20 est engagé dans un logement cylindrique du carter interne 12 et est centré et guidé en rotation dans ce logement par une douille cylindrique 28.

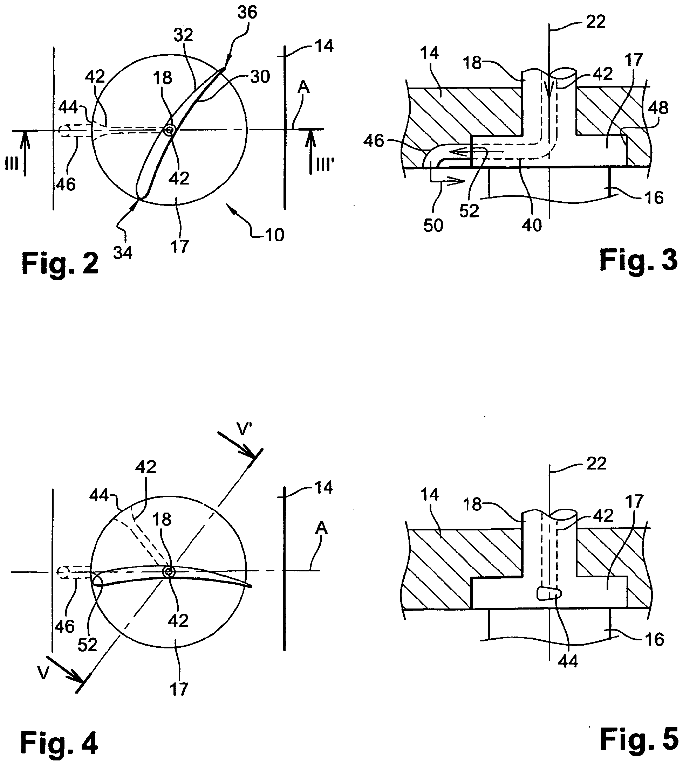

La pale 16 de chaque aube 10 comprend un intrados 30 et un extrados 32 reliés entre eux en amont par un bord 34 d'attaque et en aval par un bord 36 de fuite des gaz 38 s'écoulant dans la veine du compresseur (figures 1 et 2). Les platines interne 19 et externe 17 ont chacune un contour sensiblement circulaire et sont logées dans des évidements de formes complémentaires du carter interne 12 et du carter externe 14, respectivement.

Les aubes 10 sont déplaçables en rotation autour de leurs axes 22 entre une position de fermeture ou de quasi-fermeture, représentée en figure 2, et une position d'ouverture ou de pleine ouverture, représentée en figure 4.

Dans la position de fermeture de la figure 2, les pales 16 des aubes sont inclinées par rapport à l'axe longitudinal A de la turbomachine et définissent entre elles une section minimale de passage d'air dans la veine. Les aubes 10 sont amenées dans cette position lorsque la turbomachine est à bas régime ou au ralenti, le débit d'air s'écoulant dans le compresseur ayant alors une valeur minimale.

Dans la position d'ouverture de la figure 4, les pales 16 des aubes s'étendent sensiblement parallèlement à l'axe A de la turbomachine de façon à ce que la section de passage d'air entre les pales soit maximale. Les aubes 10 sont amenées dans cette position lorsque la turbomachine est au régime plein gaz, le débit d'air s'écoulant dans le compresseur ayant alors une valeur maximale.

En position de fermeture, l'écoulement d'air sur les pales 16 a une forte incidence, ce qui génère des décollements d'air sur les pales 16, ces décollements disparaissant lorsque les aubes 10 sont proches de leurs conditions de fonctionnement nominales.

L'invention permet de supprimer ou au moins de réduire cet inconvénient grâce à une injection d'air en amont des aubes 10 au niveau des extrémités radialement internes et/ou externes des pales des aubes, le débit d'air injecté étant maximal lorsque les aubes sont en position de fermeture pour éviter la création des décollements d'air précités, et nul lorsque ces aubes sont en position de pleine ouverture pour ne pas affecter négativement les performances de la turbomachine aux régimes élevés. Pour cela, le débit d'injection d'air dépend de l'angle de calage des aubes 10.

Selon la présente invention, l'air destiné à être injecté dans la veine est amené par des conduits formés dans la platine interne et/ou dans la platine externe d'au moins certaines des aubes d'un étage du compresseur, ces conduits communiquant avec des passages du carter correspondant du compresseur pour le cheminement de l'air jusqu'à la veine.

Lorsque la platine interne 19 comporte de tels conduits d'air, des passages d'air sont formés dans le carter interne 12, et lorsque la platine externe 17 comporte de tels conduits d'air, des passages d'air sont formés dans le carter externe 14.

Pour des raisons de clarté, les exemples de réalisation de l'invention décrits dans ce qui suit concernent uniquement des conduits d'air formés dans les platines externes 17 des aubes et destinés à communiquer avec des passages correspondants du carter externe 14. Ces exemples de réalisation sont toutefois applicables aux platines internes 19 des aubes et au carter interne 12.

Dans le mode de réalisation des figures 2 à 5, un conduit 40 d'alimentation en air est formé dans la platine 17 de chaque aube 10. Ce conduit 40 est sensiblement rectiligne et s'étend sensiblement radialement par rapport à l'axe 22 de rotation de l'aube. Il débouche à une extrémité sur le bord périphérique de la platine 17 et son extrémité opposée est reliée à l'extrémité radialement interne d'un autre conduit 42 qui s'étend sensiblement radialement dans l'axe du pivot 18 de l'aube. L'extrémité radialement externe de ce conduit 42 est raccordée par des moyens appropriés à des moyens de prélèvement d'air en aval sur le compresseur. Le débouché 44 du conduit 40 situé sur la périphérie de la platine a une forme sensiblement circulaire, triangulaire, oblongue, rectangulaire ou trapézoïdale et est destiné à communiquer avec un passage 46 formé dans le carter 14 lorsque l'aube est en position de fermeture (figures 2 et 3) et à être obturé par le carter lorsque l'aube est en position d'ouverture (figures 4 et 5).

Le passage 46 du carter a une forme sensiblement en L et débouche à une extrémité sur la paroi cylindrique 48 de l'évidement du carter recevant la platine 17, son autre extrémité débouchant dans la veine du compresseur pour l'injection d'air dans cette veine (flèche 50). Le débouché 52 du passage 46 sur la paroi 48 peut avoir une forme quelconque. Les formes géométriques particulières des débouchés 44 des conduits 40 permettent de faire varier le débit d'air passant à travers ces conduits de façon linéaire ou non linéaire lors du déplacement en rotation des aubes autour de leurs axes.

Lorsque les aubes 10 sont en position de fermeture (figures 2 et 3), les conduits 40 des platines sont alignés avec les passage 46 du carter. De l'air circule alors dans les conduits 42 des pivots, dans les conduits 40 des platines, puis dans les passages 46 du carter, l'air étant ensuite injecté dans la veine du compresseur (flèche 50) pour s'opposer aux décollements d'air sur les pales 16 des aubes 10. Le débit d'air injecté dans la veine a dans ce cas une valeur maximale.

Lorsque les aubes 10 sont en position d'ouverture (figures 4 et 5), les conduits 40 des platines ne communiquent pas avec les passages 46 du carter et il n'y a donc pas d'air injecté dans la veine du compresseur. Dans cette position, les débouchés 44 des conduits des platines sont obturés par la paroi 48 de l'évidement du carter 14 et les entrées des passages 46 du carter sont obturées par les bords périphériques des platines 17.

La calibration précise du débit d'air injecté dans la veine est possible par le contrôle de la section des conduits et passages formés dans la platine et le carter.

Les aubes 10 peuvent adopter une ou plusieurs positions intermédiaires entre les positions représentées en figures 2 et 4, le débit d'air injecté étant alors fonction de la section de passage de l'air dans les conduits 40 des platines et les passages 46 du carter.

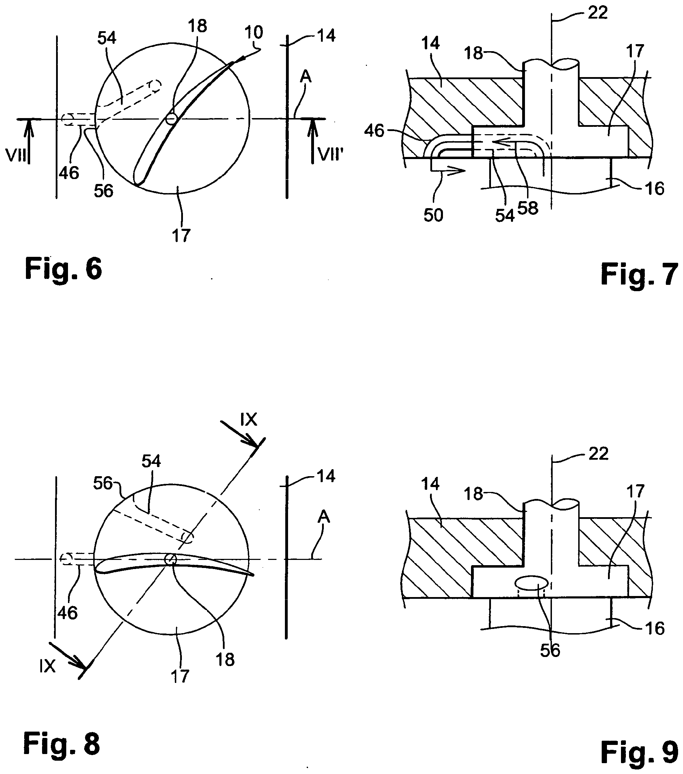

Dans la variante de réalisation représentée aux figures 6 à 9, les passages 46 du carter sont identiques à ceux des figures 2 à 5.

Les conduits 54 des platines 17 s'étendent sur une partie de la dimension transversale des platines et ont une forme sensiblement en L. Ils comprennent une sortie 56 débouchant sur le bord périphérique de la platine 17 et une entrée débouchant sur la face de la platine, située du côté de la pale 16 de l'aube. Cette entrée du conduit 54 débouche du côté de l'extrados de la pale 16 de l'aube où l'air est en légère dépression. Les sorties 56 des conduits 54 situées sur les bords périphériques des platines ont une forme sensiblement ovale ou oblongue dans l'exemple représenté.

Les figures 6 et 7 représentent une aube 10 en position de fermeture dans laquelle le conduit 54 de sa platine communique avec le passage du carter 14. Une partie du débit d'air circulant dans la veine du compresseur est alors prélevée (flèche 58) par les conduits 54 des platines, circule d'aval en amont dans ces conduits, puis dans le passage 46 du carter pour être réinjecté en amont de l'aube.

Lorsque l'aube 10 est en position d'ouverture aux figures 8 et 9, les passages 46 et les conduits 54 ne communiquent pas l'un avec l'autre.

Les passages 46 formés dans le carter 14 peuvent déboucher dans la veine du compresseur directement en amont de l'étage d'aubes 10. En variante, ces passages peuvent s'étendre sur une dimension donnée dans le carter et dans une direction déterminée et déboucher dans la veine, en amont d'une roue mobile du compresseur ou en amont d'un autre étage redresseur du compresseur.

## Revendications

1. Compresseur de turbomachine, comprenant un carter annulaire (14) et au moins un étage redresseur formé d'une rangée annulaire d'aubes (10) à calage variable comportant chacune une pale (16) reliée à au moins une extrémité par une platine (17) à contour sensiblement circulaire à un pivot cylindrique radial (18) guidé en rotation dans un orifice correspondant du carter (14), chaque aube étant déplaçable en rotation autour d'un axe défini par le pivot de l'aube entre une première position et une seconde position, **caractérisé en ce que** les platines d'au moins certaines des aubes comportent chacune un conduit (40, 54) d'alimentation en air d'un passage (46) qui est formé dans le carter et dont une extrémité débouche dans la veine du compresseur pour l'injection d'air dans cette veine en amont de l'aube, le conduit d'alimentation formé dans la platine ayant une extrémité (44, 56) destinée à communiquer avec le passage correspondant du carter lorsque l'aube est dans la première position, et à être obturée par le carter lorsque l'aube est dans la seconde position, de façon à ce que le débit d'injection d'air dépende de l'angle de calage des aubes.

2. Compresseur selon la revendication 1, **caractérisé en ce que** les aubes (10) sont déplaçables entre une position d'ouverture et une position de fermeture, les conduits d'alimentation des aubes étant destinés à communiquer avec les passages (46) du carter (14) lorsque les aubes sont en position de fermeture ou dans une position intermédiaire, et à être obturés par le carter lorsque les aubes sont en position d'ouverture.

3. Compresseur selon la revendication 1 ou 2, **caractérisé en ce que** les conduits d'alimentation (40, 54) sont formés dans des platines (17) radialement externes des aubes, et sont destinés à communiquer avec des passages (46) formés dans un carter externe (14) entourant les aubes.

4. Compresseur selon la revendication 1 ou 2, **caractérisé en ce que** les conduits d'alimentation (40, 54) sont formés dans des platines (19) radialement internes des aubes, et sont destinés à communiquer avec des passages (46) formés dans un carter interne (12) entouré par les aubes.

5. Compresseur selon l'une des revendications précédentes, **caractérisé en ce que** l'extrémité (44, 56) du conduit d'alimentation de la platine destinée à être obturée par le carter est située sur le bord périphérique de cette platine.

6. Compresseur selon l'une des revendications précédentes, **caractérisé en ce que** le conduit d'alimentation (54) de la platine (17) débouche à son autre extrémité dans la veine du compresseur en aval de l'aube pour le prélèvement d'air dans cette veine.

7. Compresseur selon l'une des revendications 1 à 5, **caractérisé en ce que** le conduit d'alimentation (40) de la platine (17) est relié à un conduit (42) sensiblement radial formé dans le pivot (18) de l'aube et relié à son extrémité radialement externe à un canal de prélèvement d'air dans la veine du compresseur en aval de l'étage redresseur.

8. Compresseur selon l'une des revendications précédentes, **caractérisé en ce que** l'extrémité obturable (44, 56) du conduit de la platine (17) a une forme sensiblement circulaire, triangulaire, oblongue, rectangulaire ou trapézoïdale.

9. Compresseur selon l'une des revendications précédentes, **caractérisé en ce que** le passage (46) du carter débouche dans la veine du compresseur, en amont d'un étage redresseur précédent ou d'une roue de compresseur.

10. Compresseur selon l'une des revendications précédentes, **caractérisé en ce que** le passage (46) du carter s'étend vers l'amont depuis un évidement de logement de la platine (17) de l'aube.

11. Turbomachine, telle qu'un turboréacteur, un turbopropulseur d'avion, un turbomoteur ou une machine industrielle, **caractérisée en ce qu'**elle comprend un compresseur selon l'une des revendications précédentes.

12. Aube de redresseur à calage variable pour un compresseur selon l'une des revendications 1 à 10, **caractérisée en ce qu'**elle comprend une pale (16) reliée à au moins une extrémité par une platine (17) à contour sensiblement circulaire à un pivot cylindrique (18) définissant l'axe (22) de rotation de l'aube, la platine comportant un conduit (40, 54) dont une extrémité débouche sur son bord périphérique.

13. Aube selon la revendication 12, **caractérisée en ce que** l'autre extrémité du conduit (40) est reliée à un autre conduit (42) formé dans le pivot cylindrique (18).

14. Aube selon la revendication 12, **caractérisée en ce que** l'autre extrémité du conduit (40) débouche sur une face de la platine, située du côté de la pale.

## Patentansprüche

1. Turbomaschinenverdichter, enthaltend ein ringförmiges Gehäuse (14) und zumindest eine Leitschaufelstufe, die aus einer ringförmigen Reihe von Schaufeln (10) mit variabler Festellposition gebildet ist, die jeweils ein Schaufelblatt (16) enthalten, das an zumindest einem Ende über eine Scheibe (17) mit im Wesentlichen kreisförmiger Kontur mit einem radial verlaufenden, zylindrischen Drehzapfen (18) verbunden ist, der drehbar in einer entsprechenden Öffnung des Gehäuses (14) geführt ist, wobei jede Schaufel um eine Achse, welche der Drehzapfen der Schaufel definiert, zwischen einer ersten Position und einer zweiten Position verdrehbar ist, **dadurch gekennzeichnet, dass** die Scheiben zumindest bestimmter der Schaufeln jeweils eine Versorgungsleitung (40, 54) zur Luftversorgung eines Durchgangs (46) enthalten, der in dem Gehäuse ausgebildet ist und von dem ein Ende in den Kanal des Verdichters zur Lufteinspeisung in diesen Kanal stromaufwärts der Schaufel mündet, wobei die in der Scheibe ausgebildete Versorgungsleitung ein Ende (44, 56) hat, das dazu bestimmt ist, mit dem entsprechenden Durchgang des Gehäuses zu kommunizieren, wenn die Schaufel in der ersten Position ist, und über das Gehäuse verschlossen zu werden, wenn die Schaufel in der zweiten Position ist, so dass die Lufteinspeisemenge von dem Einstellwinkel der Schaufeln abhängt.

2. Verdichter nach Anspruch 1, **dadurch gekennzeichnet, dass** die Schaufeln (10) zwischen einer Offenposition und einer Schließposition verlagerbar sind, wobei die Versorgungsleitungen der Schaufeln dazu bestimmt sind, mit den Durchgängen (46) des Gehäuses (14) zu kommunizieren, wenn die Schaufeln in der Schließposition bzw. in einer Zwischenposition sind, und von dem Gehäuse verschlossen zu werden, wenn die Schaufeln in der Offenposition sind.

3. Verdichter nach Anspruch 1 oder 2, **dadurch gekennzeichnet, dass** die Versorgungsleitungen (40, 54) in den radial äußeren Scheiben (17) der Schaufeln ausgebildet und dazu bestimmt sind, mit Durchgängen (46) zu kommunizieren, die in einem äußeren Gehäuse (14) ausgebildet sind, welches die Schaufeln umgibt.

4. Verdichter nach Anspruch 1 oder 2, **dadurch gekennzeichnet, dass** die Versorgungsleitungen (40, 54) in radial inneren Scheiben (19) der Schaufeln ausgebildet und dazu bestimmt sind, mit Durchgängen (46) zu kommunizieren, die in einem inneren Gehäuse (12) ausgebildet sind, das von den Schaufeln umgeben wird.

5. Verdichter nach einem der vorangehenden Ansprüche, **dadurch gekennzeichnet, dass** das Ende (44, 56) der Versorgungsleitung der Scheibe, das dazu bestimmt ist, von dem Gehäuse verschlossen zu werden, an dem Umfangsrand dieser Scheibe liegt.

6. Verdichter nach einem der vorangehenden Ansprüche, **dadurch gekennzeichnet, dass** die Versorgungsleitung (54) der Scheibe (17) an ihrem anderen Ende in den Kanal des Verdichters stromabwärts der Schaufel zur Luftentnahme aus diesem Kanal mündet.

7. Verdichter nach einem der Ansprüche 1 bis 5, **dadurch gekennzeichnet, dass** die Versorgungsleitung (40) der Scheibe (17) mit einer im Wesentlichen radial verlaufenden Leitung (42) verbunden ist, die in dem Drehzapfen (18) der Schaufel ausgebildet und an ihrem radial äußeren Ende mit einer Luftentnahmeleitung aus dem Kanal des Verdichters stromabwärts der Leitschaufelstufe verbunden ist.

8. Verdichter nach einem der vorangehenden Ansprüche, **dadurch gekennzeichnet, dass** das verschließbare Ende (44, 56) der Leitung der Scheibe (17) eine im Wesentlichen kreisförmige, dreieckförmige, längliche, rechteckförmige oder trapezförmige Form hat.

9. Verdichter nach einem der vorangehenden Ansprüche, **dadurch gekennzeichnet, dass** der Durchgang (46) des Gehäuses in den Kanal des Verdichters stromaufwärts einer vorhergehenden Leitschaufelstufe oder eines Verdichterrads mündet.

10. Verdichter nach einem der vorangehenden Ansprüche, **dadurch gekennzeichnet, dass** der Durchgang (46) des Gehäuses sich stromaufwärts ausgehend von einer Aufnahmeausnehmung zum Aufnehmen der Scheibe (17) der Schaufel erstreckt.

11. Turbomaschine, wie etwa Turbostrahltriebwerk, Turboprop-Triebwerk für Flugzeuge, Turbomotor oder industrielle Maschine, **dadurch gekennzeichnet, dass** sie einen Verdichter nach einem der vorangehenden Ansprüche aufweist.

12. Leitschaufel mit variabler Festellposition für einen Verdichter nach einem der Ansprüche 1 bis 10, **dadurch gekennzeichnet, dass** sie ein Schaufelblatt (16) aufweist, das an zumindest einem Ende über eine Scheibe (17) mit im Wesentlichen kreisförmiger Kontur mit einem zylindrischen Drehzapfen (18) verbunden ist, der die Drehachse (22) der Schaufel definiert, wobei die Scheibe zumindest eine Leitung (40, 54) aufweist, von der ein Ende an ihrem Umfangsrand ausmündet.

13. Schaufel nach Anspruch 12, **dadurch gekennzeichnet, dass** das weitere Ende der Leitung (40) mit einer weiteren Leitung (42) verbunden ist, die in dem zylindrischen Drehzapfen (18) ausgebildet ist.

14. Schaufel nach Anspruch 12, **dadurch gekennzeichnet, dass** das weitere Ende der Leitung (40) auf einer Seite der Scheibe ausmündet, die auf der Seite des Schaufelblatts liegt.

## Claims

1. A turbomachine compressor comprising an annular casing (14) and at least one stator stage formed by an annular row of variable-pitch vanes (10) each comprising a blade (16) connected at least at one end by a plate (17) with a substantially circular contour to a radial cylindrical pivot (18) guided in rotation in a corresponding orifice of the casing (14), each blade being displaceable in rotation about an axis defined by the pivot of the blade between a first position and a second position, **characterized in that** the plates of at least some of the vanes each comprises a duct (40, 54) for supplying air to a passage (46) which is formed in the casing and one end of which opens into the compressor vein for injecting air into this vein upstream of the blade, the supply conduit formed in the plate having an end (44, 56) for communicating with the corresponding passage of the casing, when the vane is in the first position, and to be closed by the casing when the vane is in the second position, so that the air injection flow rate depends on the blade angle of the blades.

2. Compressor according to claim 1, **characterized in that** the vanes (10) are movable between an open position and a closed position, the vane supply ducts being intended to communicate with the passages (46) of the casing (14) when the blades are in the closed position or in an intermediate position and to be closed by the casing when the blades are in the open position.

3. A compressor according to claim 1 or 2, **characterized in that** the supply ducts (40, 54) are formed in radially outer plates (17) of the vanes and are intended to communicate with passages (46) formed in a housing (14) surrounding the blades.

4. A compressor according to claim 1 or 2, **characterized in that** the supply ducts (40, 54) are formed in radially internal plates (19) of the vanes and are intended to communicate with passages (46) formed in a housing (12) surrounded by the blades.

5. Compressor according to one of the preceding claims, **characterized in that** the end (44, 56) of the supply duct of the plate intended to be closed by the housing is located on the peripheral edge of this plate.

6. Compressor according to one of the preceding claims, **characterized in that** the supply duct (54) of the plate (17) leads at its other end into the compressor vein downstream of the blade for bleeding air from this vein.

7. Compressor according to one of claims 1 to 5, **characterized in that** the supply duct (40) of the plate (17) is connected to a substantially radial duct (42) formed in the pivot (18) of the blade and connected at its radially outer end to an air extraction channel in the compressor vein downstream of the stator stage.

8. Compressor according to one of the preceding claims, **characterized in that** the closable end (44, 56) of the conduit of the plate (17) has a substantially circular, triangular, oblong, rectangular or trapezoidal shape.

9. Compressor according to one of the preceding claims, **characterized in that** the passage (46) of the casing opens into the compressor vein upstream of a preceding stator stage or a compressor wheel.

10. Compressor according to one of the preceding claims, **characterized in that** the passage (46) of the casing extends upstream from a receiving recess of the plate (17) of the blade.

11. Turbomachine, such as a turbojet engine, an aircraft turboprop, a turboshaft engine or an industrial machine, **characterized in that** it comprises a compressor according to one of the preceding claims.

12. Vane of a stator with variable-pitch for a compressor according to one of Claims 1 to 10, **characterized in that** it comprises a blade (16) connected at at least one end by a plate (17) with a substantially circular contour to a pivot (18) defining the axis (22) of rotation of the blade, the plate comprising a conduit (40, 54), one end of which opens onto its peripheral edge.

13. A blade according to claim 12, **characterized in that** the other end of the duct (40) is connected to a further duct (42) formed in the cylindrical pivot (18).

14. A blade according to claim 12, **characterized in that** the other end of the conduit (40) opens on one face of the plate, located on the blade side.
